# EUROPÄISCHE PATENTSCHRIFT

(11) **EP 3 242 625 B1**
(45) Veröffentlichungstag und Bekanntmachung des Hinweises auf die Patenterteilung: **05.10.2022**
(21) Anmeldenummer: 15813890.9
(22) Anmeldetag: 23.12.2015
(51) Int. Cl.: A61C 8/00, A61C 1/08

(54) **SYSTEM UND ZAHNIMPLANTAT ZUR VERRINGERUNG VON ZAHNIMPLANTAT- UND ZAHNERSATZVERLUSTEN**
SYSTEM WITH DENTAL IMPLANT FOR REDUCING LOSSES OF DENTAL IMPLANTS OR DENTAL PROSTHESES
SYSTÈME AVEC IMPLANT DENTAIRE PERMETTANT DE RÉDUIRE LES PERTES D'IMPLANTS DENTAIRES ET DE PROTHÈSES DENTAIRES

(30) Priorität: 07.01.2015 DE 102015100117
(43) Veröffentlichungstag der Anmeldung: 15.11.2017
(60) Teilanmeldung: 20158878.7
(73) Patentinhaber: Scherer, Johannes, 86438 Kissing (DE)
(72) Erfinder: Scherer, Johannes, 86438 Kissing (DE)
(74) Vertreter: Lucke, Andreas
(86) Internationale Anmeldenummer: PCT/EP2015/081201
(87) Internationale Veröffentlichungsnummer: WO 2016/110419

(56) Entgegenhaltungen:
- WO-A1-03/045268
- WO-A1-2015/145450
- CH-A2- 702 586
- CN-A- 102 240 228
- DE-A1-102005 032 933
- JP-A- 2014 033 782
- US-A1- 2012 156 645

## Beschreibung

### GEBIET DER ERFINDUNG

Die vorliegende Erfindung liegt auf dem Gebiet der Zahntechnik und Zahnimplantattechnik und betrifft ein System mit einem Zahnimplantat.

### HINTERGRUND DER ERFINDUNG

Bei der Versorgung von Patienten mit Implantaten zum Bereitstellen einer Prothetik bzw. eines Zahnersatzes kann es dazu kommen, dass bereits eingesetzte Implantate wieder aus dem Kieferknochen des Patienten entfernt werden müssen. Die Hauptursachen für solche Verluste sind Entzündungen um das Implantat herum (sogenannte Periimplantitis) sowie Frakturen des Implantats, des Abutments oder von Verbindungsschrauben.

Eine Periimplantitis ist gekennzeichnet durch eine Entzündung des Weichgewebes verbunden mit einem Knochenrückgang um das Implantat. Dies führt zu einem Freiliegen der Implantatoberfläche. Üblicherweise weist die Implantatoberfläche eine gewisse Rauigkeit auf, die mithilfe spezieller Behandlungsverfahren hergestellt wird, beispielsweise mit Sandstrahlen oder Säureätzen. Diese rauhe behandelte Implantatoberfläche dient der besseren Knochenanlagerung und Knochenintegration (Osseointegration). Infolge eines Freiliegens der Implantatoberfläche im Mundraum des Patienten steigt die Anfälligkeit für eine Bakterienbesiedlung der Implantatoberfläche. Dies kann letztendlich dazu führen, dass das eingesetzte Implantat wieder entfernt werden muss, da bisher kein Verfahren bekannt ist, eine einmal mit Bakterien infizierte Implantatoberfläche wieder sicher keim- bzw. bakterienfrei zu bekommen.

Die Ursachen für die Entwicklung einer Periimplantitis sind vielfältig: Beim Befestigen von Zahnersatz auf Implantaten wird häufig eine Form von Zement zwischen der Zahnprothetik und dem Abutment verwendet. Eine vollständige Entfernung von Zementüberschüssen ist oft nicht möglich. Verbleibende Zementreste am Implantat und/oder Zahnersatz können Auslöser einer Pcriimplantitis sein.

Ferner kann es aufgrund eines Knochenrückgangs zu einer Periimplantitis kommen, da der Knochenrückgang zu einem Freiliegen der aufgerauten Implantatoberfläche führen kann. Diese kann dann von Bakterien besiedelt werden. Die Bakterienkontamination kann der Auslöser einer Periimplantitis sein.

Ursachen für einen Knochenrückgang an der Implantatoberfläche sind eine Überbelastung des Knochens bei der Operation bzw. der Implantatinsertion und/oder eine zu dünne Knochenüberdeckung, da der Knochen unter einer gewissen Knochenstärke mit Rückgang reagieren kann. Weitere Ursachen für einen Knochenrückgang und damit für eine Periimplantitis können Spannungen im Implantat sein, die auf den Knochen übertragen werden und zu einer Überbelastung des Knochens während der Einheilung des Implantats (Einheilphase) oder während der Anbringung des Zahnersatzes (prothetische Phase) führen können.

Nicht nur eine Bakterienbesiedlung der Knochenanlagerung dienenden Implantatoberfläche, sondern auch eine Bakterienbesiedlung der Implantat-Abutment-Verbindung kann eine Periimplantitis zur Folge haben.

Die US 2012/0156645 A1 offenbart ein System und ein Verfahren zum Verhindern einer Preiimplantitis. Dazu wird vorgeschlagen, bei einem Implantat eine äußere Schicht des Abschnitts oberhalb des Knochens zu entfernen und eine entfernbare Hülse aufzusetzen, die leicht gereinigt werden kann, oder die aus einem Antibiofilmmaterial besteht oder mit einer solchen beschichtet ist.

Die WO 03/045268 A1 offenbart ein Dentalimplantat mit einem Verankerungsteil zur Verankerung im Knochen und einem Aufbauteil zur Aufnahme einer prothetischen Suprakonstruktion. Der Verankerungsteil und der Aufbauteil sind einstückig aus einem Werkstoff auf Zirkonoxidbasis ausgebildet. Zumindest der Verankerungsteil ist an seiner Außenoberfläche zumindest teilweise durch ein subtraktives Verfahren vorbehandelt oder mit einer Beschichtung versehen, durch die eine Verknöcherung unterstützt wird. In einer Ausführungsform ist der Aufbauteil gegenüber der Längsachse des Verankerungsteils abgewinkelt, beispielsweise um einen Winkel von etwa 15°

WO2015145450 offenbart eine enossale Implantatanordnung, die für die Behandlung von Periimplantitis geeignet ist. Die Implantatbaugruppe umfasst einen Implantatkernkörper, der so konfiguriert ist, dass er Implantateinsatzstrukturen, die die Behandlung von Periimplantitis potenziell erleichtern, aufnehmen und mit ihnen verbinden kann.

Die CH 702586A2 offenbart einen Zahnersatz und eine Vorrichtung zum Bilden eines Zahnersatzes. Der Zahnersatz besitzt eine Vorrichtung mit einem Implantat, das eine Achse, einen formfesten Grundkörper und eine Keramikhülse aufweist, die einen Abschnitt des Kronenkörpers umschließt und eine mit der Achse einen Winkel bildende Schulterfläche aufweist. Ein am Implantat befestigtes Aufbauelement hat einen vom ersten Implantatende und von der Schulterfläche wegragenden Halteabschnitt, der eine Superstruktur hält und nicht auf der Schulterfläche aufliegt. Dabei ist die Keramikhülse mit elastischem Klebstoff an einem Mantelflächenabschnitt des Kronenkörpers und/oder die Suprastruktur mit elastischem Klebstoff am Halteabschnitt angeklebt, sodass die Keramikhülse und/oder die Superstruktur stoßdämpfend mit dem Kronenkörper verbunden ist.

### ZUSAMMENFASSUNG DER ERFINDUNG

Aufgabe der vorliegenden Erfindung ist es, ein System und ein Implantat zur Verfügung zu stellen, mit dem sowohl die Anzahl der Implantatverluste als auch die Anzahl der Verluste der vom Implantat getragenen Prothetik verringert werden kann.

Diese Aufgabe wird gelöst durch ein System nach Anspruch 1 und durch ein System nach Anspruch 8. Vorteilhafte Ausführungsformen und Weiterbildungen sind in den unabhängigen Ansprüchen angegeben. Eins der beiden erfindungsgemäßen Systeme umfasst ein Zahnimplantat mit einem Insertionsabschnitt zur Verankerung in einem Kieferknochen und einen Ersatzring zum Ersetzen eines subtraktiv entfernbaren ringförmigen Materialbereichs in einem koronalen Bereich des Insertionsabschnitts. Der Ersatzring hat eine Form, die zumindest teilweise derart in die Form des Zahnimplantats im koronalen Bereich einbeschrieben werden kann, dass eine innere Mantelfläche des Ersatzrings innerhalb der Form des Zahnimplantats liegt.

Die Form des Ersatzrings und des Zahnimplantats entspricht der jeweiligen Außenkontur Ersatzrings bzw. des Zahnimplantats und ist durch die jeweiligen Oberflächen oder Begrenzungsflächen definiert. Demnach wird durch die Form des Ersatzrings und des Zahnimplantats auch ein jeweiliges Volumen definiert, das dem Volumen des Ersatzrings bzw. des Zahnimplantats entspricht.

Dadurch, dass sich die Formen des Ersatzrings und des Zahnimplantats bei einer entsprechenden Überlagerung im koronalen Bereich, bei der es sich um eine gedachte Überlagerung der abstrakten Formen, jedoch nicht um eine tatsächliche Überlagerung der körperlichen Gegenstände handelt, so überlagern, dass die innere Mantelfläche des Ersatzrings innerhalb des Zahnimplantats liegt, ist es möglich, das Material des Überlagerungsbereichs des Zahnimplantats subtraktiv zu entfernen und den Ersatzring formschlüssig auf den koronalen Bereich des Zahnimplantats aufzusetzen. Dadurch kann eine mit Bakterien infizierte und kontaminierte Implantatoberfläche subtraktiv entfernt werden und durch die unkontaminierte Außenfläche des Ersatzrings ersetzt werden, an die sich Knochen anlagern kann oder angelagert werden kann (sogenannte Knochenaugmentation). Das erfindungsgemäße System ermöglicht demnach die Behandlung einer Periimplantitis, die durch eine Bakterienkontamination der Implantatoberfläche verursacht wird, und kann auch bereits die Entstehung einer Periimplantitis verhindern.

Die genannte Materialentfernung kann intraoral am inserierten Implantat vorgenommen werden. Anders als im Stand der Technik, in dem inserierte und mit Bakterien infizierte Implantate nicht oder nicht zuverlässig von Bakterien befreit werden können, so dass eine Implantatentfernung erforderlich sein kann, kann das Implantat des erfindungsgemäßen Systems aufgrund des Austauschs der subtraktiv entfernten infizierten Oberfläche gegen eine "frische" nicht infizierte Oberfläche des Ersatzrings im Kiefer des Patienten belassen werden. Dadurch kann die Wahrscheinlichkeit bzw. die Anzahl der Implantatverluste und der Verluste der Implantat-getragenen Prothetik verringert werden.

Vorzugsweise entspricht die Beschaffenheit der Außenoberfläche des Ersatzrings der Beschaffenheit der zu ersetzenden Zahnimplantatoberfläche im koronalen Bereich. Üblicherweise weisen Zahnimplantate in diesem Bereich eine aufgeraute Oberflächenbeschaffenheit oder Struktur auf, die eine bessere Osseointegration ermöglicht.

Dazu werden spezielle Verfahren zur Oberflächenbehandlung eingesetzt, wie beispielsweise Sandstrahlen oder Säureätzen. Durch eine identische oder ähnliche Oberflächenbeschaffenheit des Ersatzrings ist es möglich, einen Zustand herzustellen, der dem ursprünglichen unkontaminierten Implantatzustand entspricht, ohne das Implantat dafür entfernen zu müssen.

In einer erfindungsgemäßen Ausführungsform kann die Form des Ersatzrings zumindest teilweise derart in die Form des Zahnimplantats im koronalen Bereich einbeschrieben werden, dass die innere Mantelfläche des Ersatzrings innerhalb der Form des Zahnimplantats liegt und zugleich die äußere Mantelfläche des Ersatzrings auf oder außerhalb der Mantelfläche des Zahnimplantats liegt. Wenn die oben genannten Mantelflächen aufeinanderliegen, bleibt die Form des Zahnimplantats erhalten, nachdem ein dem Ersatzring entsprechender Materialanteil durch den Ersatzring ersetzt wurde. Weiterhin ist es auch möglich, die Form des Zahnimplantats bei Bedarf zu vergrößern. Dies kann dadurch erreicht werden, dass die Dimension des Ersatzrings so gewählt wird, dass die äußere Mantelfläche beim Einbeschreiben in die Form des Zahnimplantats außerhalb der Mantelfläche des Zahnimplantats liegt.

In einer bevorzugten Ausführungsform ist die innere Mantelfläche des Ersatzrings abschnittsweise gegenüber einer Mittelachse des Ersatzrings geneigt und läuft in Richtung einer koronalen Seite des Ersatzrings auf die Mittelachse zu. Die koronale Seite des Ersatzrings ist diejenige Seite, die beim Aufstecken des Ersatzrings auf das bearbeitete Zahnimplantat dem Zahnersatz zugewandt ist. Die gegenüberliegende Seite des Ersatzrings, die dem Zahnersatz abgewandt ist und in Richtung der Zahnwurzel bzw. der ehemals vorhandenen Zahnwurzel weist, wird in der vorliegenden Beschreibung als apikale Seite des Ersatzrings bezeichnet. Aufgrund der oben genannten Neigung ist es möglich, den Ersatzring auf das entsprechend subtraktiv bearbeitete Zahnimplantat in apikale Richtung aufzusetzen und kraftschlüssig mit diesem zu verbinden. Beispielsweise kann der Ersatzring mittels eines mit dem Implantat verschraubten Hilfsteils, beispielsweise einer Gewindestange, aufgesetzt werden. Beispielsweise kann der Ersatzring mit Hilfe eines Werkzeugs mit Innengewinde, das durch Drehbewegungen an der Gewindestange in apikale Richtung bewegt wird, aufgepresst werden. Alternativ kann der Ersatzring auch aufgeklopft werden.

In einer bevorzugten Ausführungsform beträgt die oben genannte Neigung der inneren Mantelfläche des Ersatzrings zur Mittelachse zwischen 0,5° und 2,5°, vorzugsweise 1,5°. Bei einem Winkel von 1,5° ist eine besonders gute kraftschlüssige Verbindung zwischen dem entsprechend subtraktiv bearbeiteten Implantat und dem Ersatzring möglich, für die keine zusätzliche Verschraubung benötigt wird.

In einer bevorzugten Ausführungsform des erfindungsgemäßen Systems ist die Mantelfläche des Zahnimplantats im koronalen Bereich zumindest abschnittsweise gegenüber einer Implantatachse geneigt und läuft in Richtung auf ein koronales Ende des Insertionsabschnitts auf die Implantatachse zu. Die Implantatachse ist, ebenso wie die Mittelachse des Ersatzrings, eine gedachte Gerade. Die Implantatachse entspricht einer mittleren Längsachse des Insertionsabschnitts, der in den Kieferknochen des Patienten inseriert wird. Das koronale Ende des Insertionsabschnitts ist dasjenige Ende, das in Richtung des Zahnersatzes weist. Das gegenüberliegende Ende des Insertionsabschnitts wird als apikales Ende bezeichnet. Vorzugsweise wird die subtraktive Materialentfernung am Implantat nicht manuell, sondern maschinell, beispielsweise durch Fräsen, vorgenommen. Die oben genannte Neigung bzw. Verjüngung des Implantats in koronale Richtung ermöglicht eine gute Fräsbarkeit, da die infizierte Oberfläche des inserierten Implantats in Richtung von koronal nach apikal gut zugänglich ist. Weiterhin kann durch die Verjüngung des koronalen Bereichs des Zahnimplantats eine dickere Knochenschicht angelagert werden, da um das Implantat herum mehr Platz zur Verfügung steht. Wie eingangs beschrieben wurde, kann durch eine zu dünne Knochenüberlagerung eine Periimplantitis ausgelöst werden. Demnach kann durch die Verjüngung, welche die Anlagerung einer dickeren Knochenschicht ermöglicht, einer Periimplantitis vorgebeugt werden.

In einer vorteilhaften Ausfuhrungsform beträgt die Neigung der Mantelfläche des Zahnimplantats im koronalen Bereich abschnittsweise zwischen 35° und 55°, vorzugsweise 45°. Diese Winkel ermöglichen eine besonders gute Knochenanlagerung und können somit einer Periimplantitis besonders gut vorbeugen und können das Risiko eines Implantat- und Prothetikverlustes dementsprechend reduzieren.

Alternativ oder zusätzlich kann die Neigung der Mantelfläche des Zahnimplantats im koronalen Bereich abschnittsweise zwischen 0° und 5°, vorzugsweise zwischen 0° und 3°, insbesondere 1,5° betragen. Dadurch ist es möglich, in diesem Bereich eine infizierte Oberfläche in Richtung der Implantatachse gleichmäßig subtraktiv zu entfernen bzw. in diesem Bereich eine Materialschicht mit konstanter Dicke zu entfernen. Gleichzeitig kann der zugehörige Ersatzring mit seiner entsprechend geneigten inneren Mantelfläche kraft- und formschlüssig aufgesetzt werden, ohne dass eine Verschraubung erforderlich wäre.

Ebenso wie die Mantelfläche des Zahnimplantats kann auch die äußere Mantelfläche des Ersatzrings zumindest abschnittsweise gegenüber der Mittelachse des Ersatzrings geneigt sein und in Richtung auf die koronale Seite des Ersatzrings auf die Mittelachse zulaufen. Dadurch bleibt der oben genannte Vorteil einer verbesserten Knochenanlagerung mit einer dickeren Knochenschicht bei der Verwendung des Ersatzrings erhalten. Weiterhin ist auch ein erneutes subtraktives Entfernen oder Fräsen gut möglich, wenn dieses erforderlich sein sollte.

Entsprechend der Neigung der Mantelfläche des Zahnimplantats kann auch die Neigung der äußeren Mantelfläche des Ersatzrings abschnittsweise zwischen 35° und 55°, vorzugsweise 45° betragen, was denselben oben genannten Vorteil bietet.

In einer erfindungsgemäßen Weiterbildung besitzt das Zahnimplantat einen koronalen Vorsprung, der sich vom Insertionsabschnitt in koronale Richtung erstreckt und der zur Aufnahme eines Abutments und/oder zur Aufnahme einer Bearbeitungseinheit zur intraoralen subtraktiven Bearbeitung des Zahnimplantats dient. Im Unterschied zu einer Einbuchtung oder einem inneren Konus, über die bzw. über den der Anschluss des Zahnersatzes erfolgt, kann durch den koronalen Vorsprung die Stabilität des Zahnimplantats erhöht werden, da das Zahnimplantat im Bereich des Insertionsabschnitts, insbesondere im koronalen Bereich des Insertionsabschnitts, massiv ausgebildet sein kann. Dadurch können Spannungen des Implantats vermieden werden, die beispielsweise bei einer Verschraubung mit einem nicht massiven Zahnimplantat auftreten können und die durch eine Übertragung auf den umliegenden Knochen das Periimplantitisrisiko erhöhen können. Durch den koronalen Vorsprung können demnach Spannungen verringert werden und das Risiko einer Periimplantitis als auch einer Fraktur des Implantats reduziert werden. Beides führt zu weniger Zahnimplantat- und Protetikverlusten.

Die vorliegende Erfindung umfasst weiterhin ein System, das ähnlich zu einem der vorgenannten erfindungsgemäßen Systeme ist, jedoch anstatt des Ersatzrings ein Ersatzabutment umfasst. Neben dem Ersatzabutment umfasst dieses System ein Zahnimplantat mit einem Insertionsabschnitt zur Verankerung in einem Kieferknochen und einem koronalen Vorsprung, der sich vom Insertionsabschnitt in koronale Richtung erstreckt und der zur Aufnahme eines Abutments und/oder zur Aufnahme einer Verarbeitungseinheit zur intraoralen subtraktiven Bearbeitung des Zahnimplantats dient. Im Falle einer Kontamination der Zahnimplantatoberfläche im koronalen Bereich des Insertionsabschnitts kann ein Materialbereich des Zahnimplantats subtraktiv entfernt werden, wodurch der koronale Vorsprung in apikale Richtung verlängert werden kann. Das Ersatzabutment, das nicht formschlüssig auf den unverlängerten koronalen Vorsprung des Zahnimplantats im ursprünglich inserierten Zustand aufgesetzt werden kann, kann nun, nachdem Zahnimplantatmaterial subtraktiv entfernt und damit der Vorsprung verlängert wurde, formschlüssig auf den verlängerten koronalen Vorsprung aufgesetzt werden. Dieses System kann vorteilhaft zur Behebung ästhetischer Probleme bei leichten Periimplantitisformen oder bei einem Rückgang des Weichgewebes eingesetzt werden, wenn keine Knochenaugmentation erfolgt und ein Teil des Zahnimplantats freiliegt. Ein Freiliegen des Zahnimplantats, beispielsweise bei einem Rückgang des Weichgewebes und die dadurch bedingte Sichtbarkeit des metallischen Zahnimplantats unterhalb der Zahnprothetik führt zu ästhetischen Problemen. Indem diese freiliegende sichtbare Implantatfläche nach einer subtraktiven Materialentfernung mit Hilfe des Ersatzabutments verdeckt wird, können diese ästhetischen Probleme behoben werden.

In einem oder beiden der vorgenannten erfindungsgemäßen Systeme (mit Ersatzring bzw. mit Ersatzabutment) kann der koronale Vorsprung in Richtung einer prothetischen Achse verlaufen, die zur Implantatachse des Insertionsabschnitts geneigt ist, vorzugsweise mit einem Winkel α im Bereich 0° < α ≤ 45° geneigt ist. Bei der Versorgung von Zahnimplantaten unterscheidet man zwischen einer Implantatachse und einer prothetischen Achse, die durch das Zentrum der Zahnkrone verläuft. Diese beiden Achsen weisen häufig einen Winkel von 0° bis 45° zueinander auf. Diese Neigung zwischen den Achsen wird standardmäßig durch abgewinkelte Abutments ausgeglichen. Da verschraubter Zahnersatz üblicherweise in Richtung der prothetischen Achse verschraubt wird, führt dies bei einer abgewinkelten Implantatachse zu einer doppelten Verschraubung: Nämlich einer ersten Verschraubung in Richtung der Implantatachse, bei der das Abutment am Implantat befestigt wird, und einer zweiten Verschraubung in Richtung der prothetischen Achse, bei welcher der Zahnersatz am Abutment befestigt wird. Durch die oben genannte Abwinklung zwischen dem koronalen Vorsprung und dem Insertionsabschnitt ist es möglich, den Winkel α so zu wählen und das Implantat so zu fertigen, dass der koronale Vorsprung nach der Implantatinsertion in Richtung der prothetischen Achse des zu fertigenden Zahnersatzes weist. Dadurch kann auf die erste oben genannte Verschraubung verzichtet werden und der Zahnersatz mit Hilfe nur einer Verschraubung am Implantat angebracht werden. Anders als bei der Verschraubung von gewinkelten Abutments mit einer implantatinternen Verbindung (das heißt nicht massives Implantat mit Einbuchtung ohne koronalen Vorsprung) können sich bei der externen Implantatverbindung (das heißt mit einem koronalen Vorsprung) keine Bakterien oder andere Kontaminationsursachen innerhalb einer ersten Schraubverbindung ansiedeln. Durch die Vermeidung der ersten Schraubverbindung kann ein diesbezügliches Kontaminationsrisiko, das Risiko der Entstehung einer Periimplantitis und dementsprechend auch das Risiko des Implantat- und Prothetikverlustes verringert werden.

Bei allen vorgenannten Ausführungsformen ist der koronale Vorsprung vorzugsweise einstückig mit dem Insertionsabschnitt verbunden.

Weiterhin ist in allen vorgenannten Ausführungsformen der erfindungsgemäßen Systeme der koronale Vorsprung vorzugsweise konusförmig und hat vorzugsweise einen Konuswinkel von weniger als 11°, besonders vorzugsweise einen Konuswinkel zwischen 6° und 10° und insbesondere einen Konuswinkel von 8°. Ein derart geformter koronaler Vorsprung ermöglicht beim formschlüssigen Aufsetzen eines entsprechend geformten Abutments eine sogenannte selbsthemmende Konusverbindung, die stabil ist, bakteriendicht ist und ohne eine Zementierung auskommt. Durch den Verzicht auf Zement und durch die Vermeidung einer Bakterienbesiedlung der Implantat-Abutment-Verbindung kann das Risiko von Implantatund Prothetikverlusten verringert werden.

In einer vorteilhaften Ausfuhrungsform ist der koronale Vorsprung zumindest abschnittsweise kreis- oder ellipsenförmig im Querschnitt. Im Unterschied zu einem sechs- oder vielkantförmigen Querschnitt ist mit einem solchen Querschnitt eine Implantat-Abutment-Verbindung ohne Spiel möglich, sodass eine Schraubenlockerung verhindert werden kann und die Bakteriendichtheit der Verbindung sichergestellt werden kann, was zur Verminderung von Implantat- und Prothetikverlusten beitragen kann.

In einer vorteilhaften Ausführungsform der erfindungsgemäßen Systeme weist das Zahnimplantat am koronalen Ende des Insertionsabschnitts eine Schulter auf. Dadurch besteht ein Abstand zwischen der seitlichen Mantelfläche des Implantats im koronalen Bereich, an der Knochen anliegt, und dem Implantatanschluss für die Zahnprothetik, beispielsweise dem vorgenannten koronalen Vorsprung. Durch das Einführen dieses Abstands (sogenanntes Plattformswitching) zwischen der Implantatanschlussstelle und dem umliegenden Gewebe kann verhindert werden, dass eine Bakterienbesiedlung an der Implantatanschlussstelle zu einer Periimplantitis führt. Weiterhin kann durch die Schulter sichergestellt werden, dass genug Platz für eine Materialentfernung zur Verfügung steht.

Bei den vorgenannten erfindungsgemäßen Systemen kann der Ersatzring oder das Ersatzabutment ein Innengewinde aufweisen. Dadurch ist es möglich den Ersatzring bzw. das Ersatzabutment über ein entsprechendes am inserierten Zahnimplantat hergestelltes Außengewinde auf das Zahnimplantat zu schrauben. Das Außengewinde kann beispielsweise durch ein Gewindeschneiden im koronalen Bereich hergestellt werden. Vor einem solchen Gewindeschneiden kann das Zahnimplantat subtraktiv bearbeitet worden sein, beispielsweise mittels eines Fräsverfahrens.

Schließlich kann das erfindungsgemäße System zusätzlich auch eine Vorrichtung zur intraoralen subtraktiven Bearbeitung des inserierten Zahnimplantats umfassen, wobei die Vorrichtung Folgendes umfasst:
- einen Anschluss, mit dem die Vorrichtung innerhalb des Mundraums eines Patienten an das Implantat angeschlossen werden kann, und
- eine subtraktive Bearbeitungseinheit, insbesondere eine Fräse, mit der Zahnimplantatmaterial an der Oberfläche des koronalen Bereichs abgetragen werden kann.

Durch die subtraktive Bearbeitungseinheit kann ein manuelles Abschleifen oder Polieren der infizierten Implantatoberfläche vermieden werden, was auch nur schwer möglich und wenig zuverlässig ist. Beispielsweise kann die Vorrichtung eine Fräse umfassen, die in ein zahnärztliches Winkelstück einspannbar ist, wozu auf das Abutment beispielsweise ein Führungsteil aufgesteckt werden kann. Passend zu einem solchen Führungsteil kann die Fräse eine innere Aussparung aufweisen. Vorzugsweise kann die Form der Fräse der Geometrie des später aufgesteckten Ersatzrings oder einer Geometrie entsprechen, die für ein formschlüssiges Aufsetzen des Ersatzabutments erforderlich ist. Durch die Entfernung des Zahnimplantatmaterials kann genau die Form erzeugt werden, auf die der Ersatzring oder das Ersatzabutment formschlüssig aufgesteckt werden kann.

Neben den zuvor genannten erfindungsgemäßen Systemen umfasst die vorliegende Offenbarung auch ein Zahnimplantat mit einem Insertionsabschnitt der entlang einer Implantatachse verläuft und einen koronalen Vorsprung zur Aufnahme eines Abutments und/oder zur Aufnahme einer Bearbeitungseinheit zur intraoralen subtraktiven Oberflächenbearbeitung des Insertionsabschnitts. Der koronale Vorsprung erstreckt sich vom Insertionsabschnitt in koronale Richtung entlang einer prothetischen Achse, wobei die prothetische Achse und die Implantatachse zueinander geneigt sind, vorzugsweise mit einem Winkel α im Bereich 0° < α ≤ 45° zueinander geneigt sind. Wie zuvor beschrieben wurde, kann bei der Implantatversorgung ein Implantat mit dem für den speziellen Einzelfall erforderlichen Winkel verwendet werden, sodass der Zahnersatz mit nur einer Verschraubung in Richtung der prothetischen Achse am Implantat befestigt werden kann. Weil mit einem solchen Implantat auf die Verwendung eines abgewinkelten Abutments, das vor der Befestigung des Zahnersatzes in Richtung der genannten Implantatachse mit dem Implantat verschraubt wird, verzichtet werden kann, ist es möglich, den Zahnersatz auf dem Abutment vorzufertigen und zu einem späteren Zeitpunkt mit nur einer Verschraubung am Implantat zu befestigen. Weil die Befestigung des Zahnersatzes am Abutment außerhalb des Mundraums des Patienten und zeitlich unabhängig von der Behandlungssitzung mit dem Patienten gefertigt werden kann, können Zementüberschüsse und/oder andere Verunreinigungen beim Einsetzen des Zahnersatzes vermieden werden.

Zudem können aufgrund der nicht vorhandenen ersten Verbindung auch diesbezügliche Verunreinigungen zwischen dem Implantat und einem nicht nichterforderlichen abgewinkelten Abutment vermieden werden.

Aufgrund des koronalen Vorsprungs, durch den eine externe Implantat-Abutment-Verbindung hergestellt werden kann, kann das Implantat im koronalen Bereich massiv und damit stabil ausgebildet sein, sodass eine spannungsinduzierte Periimplantitis und Implantatfrakturen vermieden werden können.

Dementsprechend löst auch dieses erfindungsgemäße Zahnimplantat die Aufgabe, das Risiko von Implantat- und Prothetikverlusten zu verringern.

Es wird ausdrücklich darauf hingewiesen, dass das zuletzt genannte nichterfindungsgemäße Zahnimplantat auch alle Merkmale und Eigenschaften derjenigen Zahnimplantate umfassen kann, die im Zusammenhang mit den vorgenannten erfindungsgemäßen Systemen beschrieben wurden.

Die vorliegende Offenbarung umfasst auch ein Verfahren, das eine subtraktive Bearbeitung eines inserierten Zahnimplantats und ein Befestigen eines Ersatzrings oder eines Ersatzabutments am inserierten subtraktiv bearbeiteten Zahnimplantat umfasst.

Bei jedem der Teile des Ersatzrings, des Ersatzabutments und des Zahnimplantats kann es sich um solche Teile handeln, wie im Zusammenhang mit den vorgenannten erfindungsgemäßen Systemen beschrieben wurden.

In einer bevorzugten Ausführungsform des erfindungsgemäßen Verfahrens umfasst die subtraktive Bearbeitung ein Fräsen.

Das nichterfindungsgemäße Verfahren kann zudem auch ein Herstellen eines Gewindes am Zahnimplantat umfassen, beispielsweise mittels eines Gewindeschneidens. Das Gewinde kann im koronalen Bereich hergestellt werden.

Das Befestigen des Ersatzrings oder des Ersatzabutments am inserierten, subtraktiv bearbeiteten Zahnimplantat kann mithilfe eines oder mehrerer der folgenden Schritte vorgenommen werden:
- Aufklopfen des Ersatzrings oder des Ersatzabutments auf das Zahnimplantat,
- Verschrauben über ein Innengewinde des Ersatzrings oder des Ersatzabutments und über ein Außengewinde des Zahnimplantats,
- Verkleben, beispielsweise mit Zement oder Knochenzement,
- intraorales Verschweißen.

### KURZBEZEICHNUNG DER FIGUREN

Weitere Vorteile und Merkmale der Erfindung ergeben sich aus der Beschreibung der folgenden Figuren, in denen gleiche Teile mit gleichen Bezugszeichen bezeichnet sind.

In den folgenden Zeichnungen zeigt
- Figur 1: ein Zahnimplantat, das Bestandteil eines nichterfindungsgemäßen Systems ist,
- Figur 2: ein nichterfindungsgemäßes System gemäß einer ersten Ausführungsform,
- Figur 3: einen Ersatzring, der im nichterfindungsgemäßen System der Figur 2 verwendet wird, in Schnittansicht (oben) und in Draufsicht (unten),
- Figur 4: einen Schnitt durch einen Ersatzring eines erfindungsgemäßen Systems gemäß einer zweiten Ausführungsform,
- Figur 5: einen Schnitt durch einen Ersatzring eines erfindungsgemäßen Systems gemäß einer dritten Ausführungsform,
- Figur 6: jeweils ein Implantat für eine externe Implantat-Abutment-Verbindung (Figur 6a) und ein Implantat für eine interne Implantat-Abutment-Verbindung (Figur 6b), und
- Figur 7: ein erfindungsgemäßes Zahnimplantat, bei dem die prothetische Achse und die Implantatachse zueinander geneigt sind.

### AUSFÜHRLICHE BESCHREIBUNG BEISPIELHAFTER AUSFÜHRUNGSFORMEN

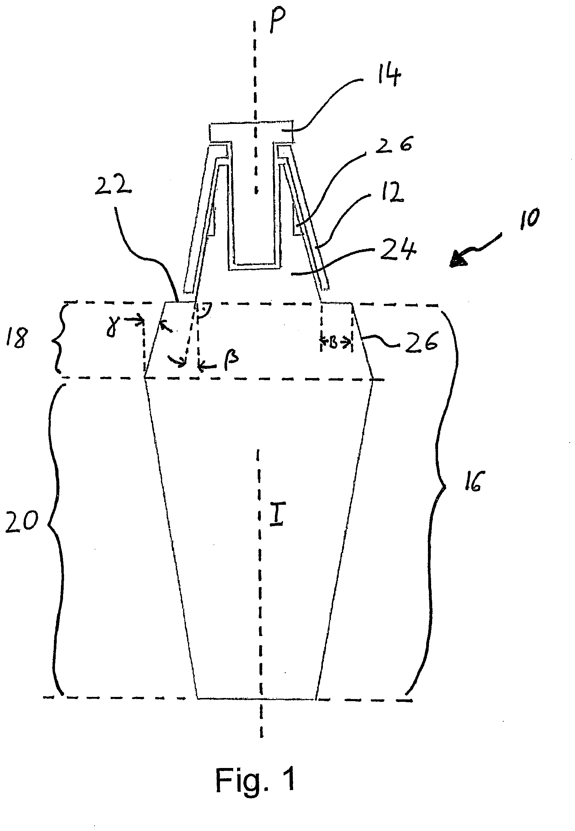

Figur 1 zeigt ein Zahnimplantat 10, das sich für die Verwendung in einem System eignet und auf dem ein Abutment 12 mithilfe einer Schraube 14 befestigt ist. Das Zahnimplantat 10 umfasst einen Insertionsabschnitt 16, der wiederum einen koronalen Bereich 18 und einen apikalen Bereich 20 aufweist. Am koronalen Ende des Insertionsabschnitts 16 befindet sich eine Schulter 22, von der aus sich ein externer Konus 24 in koronale Richtung entlang einer prothetischen Achse P erstreckt. Beim Implantat 10 der Figur 1 fällt die prothetische Achse P mit einer Implantatachse I zusammen, die längs des Insertionsabschnitts 16 durch dessen Zentrum verläuft. Seitlich am externen Konus 24 sind Aussparungen 26 vorgesehen, die zur Sicherung einer Rotationslage des Abutments 12 dienen.

Bei einer Versorgung eines Patienten mit dem Implantat 10 wird der Insertionsabschnitt 16 in den Kieferknochen des Patienten eingesetzt, wobei der Insertionsabschnitt 16 mithilfe seines Gewindes (nicht gezeigt) in den Knochen eingeschraubt wird. Wie in Figur 1 gezeigt ist, kann sich der apikale Bereich 20 in apikale Richtung (in Figur 1 "nach unten") verjüngen. Wie in Figur 1 zu erkennen ist, ist die äußere Mantelfläche 26 des Zahnimplantats 10 im koronalen Bereich 18 gegenüber der Implantatachse I um den Winkel γ geneigt, sodass sich der koronale Bereich 18 in koronale Richtung (in Figur 1 "nach oben") verjüngt. Diese Verjüngung in koronale Richtung ermöglicht die Anlagerung einer dickeren Knochenschicht an das Implantat am koronalen Ende des Insertionsabschnitts 16, wodurch der Entstehung einer Periimplantitis entgegengewirkt werden kann. Abweichend von der nicht maßstabsgetreuen Abbildung der Figur 1 kann der Winkel γ einen Wert von 45° haben, wodurch eine besonders gute Knochenaugmentation ermöglicht wird. Weiter unten wird erläutert, dass abschnittsweise auch ein Winkel von γ = 1,5° vorteilhaft sein kann.

Der Konuswinkel β beträgt in einer bevorzugten Ausführungsform 8°. Dadurch ist die Konusverbindung zwischen dem entsprechend geformten Abutment 12 und dem externen Konus 24 selbsthemmend, das heißt aufgrund eines Reibschlusses gegen ein Verdrehen und in gewissem Maße gegen ein Auseinanderziehen gesichert. Eine solche Konusverbindung mit einem Konuswinkel β von weniger als 11° ist selbsthemmend und zudem bakteriendicht, sodass die Gefahr einer Bakterieneinnistung zwischen dem Abutment 12 und dem Implantat 10 gering ist.

Vorzugsweise hat der externe Konus 24 einen kreisförmigen Querschnitt, der sich bei einem Schnitt quer zur prothetischen Achse P ergibt. Im Unterschied zu einem Querschnitt mit Sechskantprofil oder Vielkantprofil kann durch den kreisförmigen Querschnitt ein Spiel, beispielsweise bei einer Rotationskrafteinwirkung auf das Abutment 12, vermieden werden. Dadurch kann die Bakteriendichtheit der Implantat-Abutment-Verbindung weiter verbessert und zudem verhindert werden, dass sich die Schraube 14 über längere Zeit löst.

Die Schulter 22 bietet einerseits den Vorteil, dass seitlich, das heißt quer zur Implantatachse I, genug Platz zur Verfügung steht, um Material des Implantats 10 im koronalen Bereich 18 zu entfernen und somit zugleich eine kontaminierte Oberfläche im koronalen Bereich 18 zu entfernen. Andererseits besteht aufgrund der Schulter 22 ein Abstand zwischen dem apikalen Ende des Abutments 12 und dem umliegenden Knochen, der seitlich an der Mantelfläche 26 des Implantats angelagert ist. Durch diesen Versatz (sogenanntes Plattformswitching) kann das Risiko einer Periimplantitis weiter verringert werden, weil bei einer Bakterienbesiedlung in der Implantat-Abutment-Verbindung diese aufgrund der Schulter 22 nicht unmittelbar an das umliegende Knochengewebe und die für die Knochenanlagerung behandelte Implantatoberfläche angrenzt.

In einer bevorzugten Ausführungsform hat der externe Konus 24 eine Länge zwischen 1,5 mm und 3,5 mm, beispielsweise von 2,5 mm, der koronale Bereich 18 eine Ausdehnung zwischen 2 mm und 4 mm, beispielsweise von 3 mm, in Richtung der Implantatachse I und der externe Konus 24 einen Durchmesser zwischen 1,7 mm und 3,7 mm, beispielsweise von 2,7 mm, am apikalen Ende auf der Höhe der Schulter 22. Die Breite B der Schulter 22 beträgt in einer bevorzugten Ausführungsform zwischen 0,2 mm und 2 mm, beispielsweise 1,5 mm.

In allen erfindungsgemäßen Ausführungsformen können das Implantat 10 und/oder der Ersatzring 28 aus Titan bestehen.

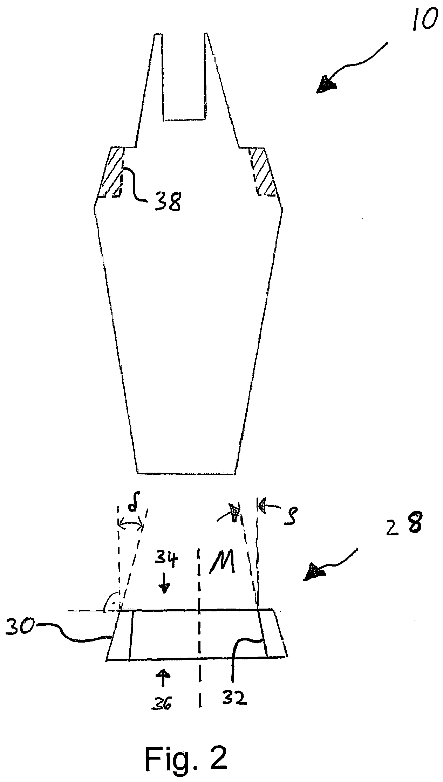

Figur 2 zeigt ein System gemäß einer ersten Ausführungsform mit dem Implantat 10 der Figur 1 und einem Ersatzring 28. In Figur 2 ist ein Längsschnitt durch den Ersatzring 28 entlang einer Mittelachse M des Ersatzrings dargestellt. In Figur 2 ist zu erkennen, dass sowohl die äußere Mantelfläche 30 des Ersatzrings 28 als auch die innere Mantelfläche 32 des Ersatzrings 28 gegenüber der Mittelachse M geneigt sind, und zwar mit einem Winkel δ bzw. ρ. Dadurch verkleinert sich sowohl der äußere als auch der innere Durchmesser des Ersatzrings 28 in Richtung auf eine koronale Seite 34 des Ersatzrings 28, die einer apikalen Seite 36 des Ersatzrings 28 gegenüberliegt.

Bei der Ausführungsform der Figur 2 ist der zu ersetzende Materialbereich des Implantats 10 schraffiert dargestellt. Es ist zu beachten, dass es sich wie bei der Figur 1 bei der Darstellung des Implantats 10 in der Figur 2 um einen Längsschnitt entlang der Implantatachse I durch das Implantat handelt. Das Implantat 10 kann bezüglich der Implantatachse I und der prothetischen Achse P rotationssymmetrisch oder im Wesentlichen rotationssymmetrisch sein. Ein koronaler Bereich 18, der zur prothetischen Achse P rotationssymmetrisch ist, bietet den Vorteil, dass dieser gut mithilfe einer Fräse, die um die prothetische Achse P rotiert, gefräst werden kann.

Nach der subtraktiven Bearbeitung des Zahnimplantats 10 besitzt die Mantelfläche 38 des Zahnimplantats 10 im koronalen Bereich 18 vorzugsweise eine Form oder Kontur, die derjenigen der inneren Mantelfläche 32 des zugehörigen Ersatzrings 38 entspricht. Dadurch ist es möglich, bei der bevorzugten Neigung der Mantelflächen 38 und 32 gegenüber der Implantatachse I bzw. gegenüber der Mittelachse M den Ersatzring 28 auf das subtraktiv verarbeitete Implantat 10 in Richtung von koronal nach apikal formschlüssig aufzusetzen. Bei einer Neigung von 1,5° zwischen den Mantelflächen 38, 32 und den jeweiligen Achsen I, M, kann die Verbindung zwischen dem subtraktiv verarbeiteten Implantat und dem aufgesetzten Ersatzring 28 derart kraftschlüssig oder reibschlüssig sein, dass eine zusätzliche Verschraubung nicht erforderlich ist.

Die Form und die Kontur der äußeren Mantelfläche 30 des Ersatzrings kann der Form und der Kontur der Mantelfläche 26 des unbearbeiteten Implantats 10 entsprechen, was jedoch nicht unbedingt erforderlich ist.

Um den Zustand des keimfreien, unbearbeiteten Implantats 10 nach der Insertion wiederherzustellen, hat der Ersatzring 28 vorzugsweise eine äußere Oberfläche, deren Struktur und Beschaffenheit derjenigen der ursprünglichen Implantatoberfläche entspricht.

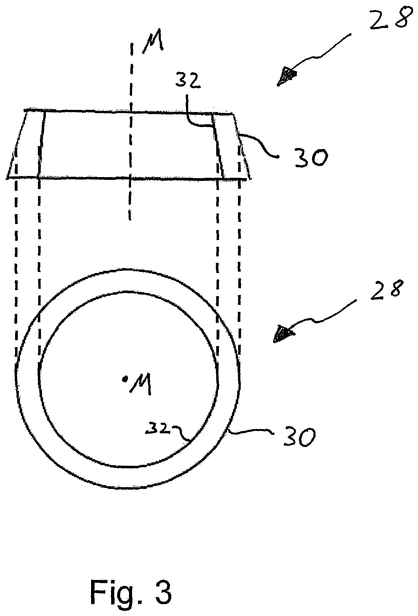

Oben in Figur 3 ist der Ersatzring 28 des Systems der Figur 2 nochmals als Längsschnitt entlang der Mittelachse M dargestellt. Unten in Figur 3 ist eine Draufsicht auf den Ersatzring 28 entlang der Mittelachse M dargestellt. Auch wenn bei der Ausführungsform der Figur 3 die Querschnitte durch die Mantellinien 32 und 30 des Ersatzrings 28 kreisförmig sind, ist zu beachten, dass die Querschnittslinien durch die Mantelflächen 32 und 30 auch andere geschlossene Verläufe aufweisen können, beispielsweise die eines Viel- oder Sechskantprofils oder andere nicht symmetrische Verläufe. Entsprechendes gilt für das Implantat, das nicht notwendigerweise rotationssymmetrisch sein muss.

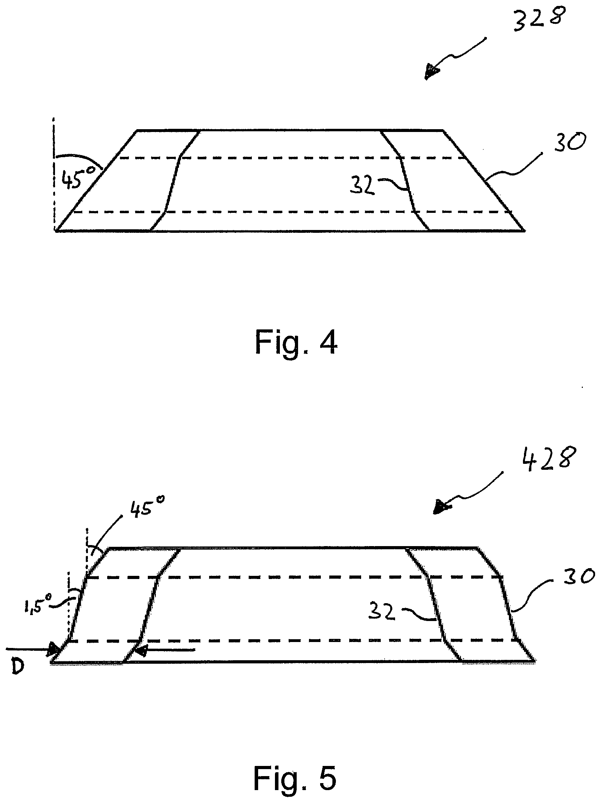

Die Figuren 4 und 5 zeigen Ersatzringe 328 und 428, die jeweils einem erfindungsgemäßen System einer zweiten Ausführungsform und einer dritten Ausführungsform angehören. Beim Ersatzring 328 der Figur 4 ist die äußere Mantelfläche 30 um 45° gegenüber der Mittelachse M geneigt, um eine gute Knochenanlagerung zu ermöglichen und eine Periimplantitis zu vermeiden. Die innere Mantelfläche 32 ist in einem koronalen und in einem apikalen Bereich (jeweils oberhalb und unterhalb der gestrichelten Linien) ebenfalls um 45° geneigt und damit parallel zur äußeren Mantelfläche 30. In einem dazwischenliegenden Bereich ist die innere Mantelfläche 32 um 1,5° gegenüber der Mittelachse M geneigt, um eine kraftschlüssige Verbindung, die ohne eine Verschraubung auskommt, zwischen dem entsprechend subtraktiv bearbeiteten Implantat 10 und dem Ersatzring 328 zu ermöglichen.

Beim Ersatzring 428 der Figur 5 entspricht der Verlauf der inneren Mantelfläche 32 dem Verlauf der inneren Mantelfläche 32 des Ersatzrings 328 der Figur 4. Der Verlauf der äußeren Mantelfläche 30 des Ersatzrings 428 aus Figur 5 ist parallel zum Verlauf der inneren Mantelfläche 32 desselben Ersatzrings. Dadurch ist die Dicke D des Ersatzrings 428 in Richtung der Mittelachse M konstant. Wenn der Verlauf der Mantelfläche 26 des Implantats 10 dem Verlauf der Mantelfläche 30 des Ersatzrings 428 entspricht, dann kann die Materialentfernung entlang der Implantatachse I gleichmäßig erfolgen, das heißt die Dicke des entfernten Materialbereichs ist in Richtung der Implantatachse I konstant.

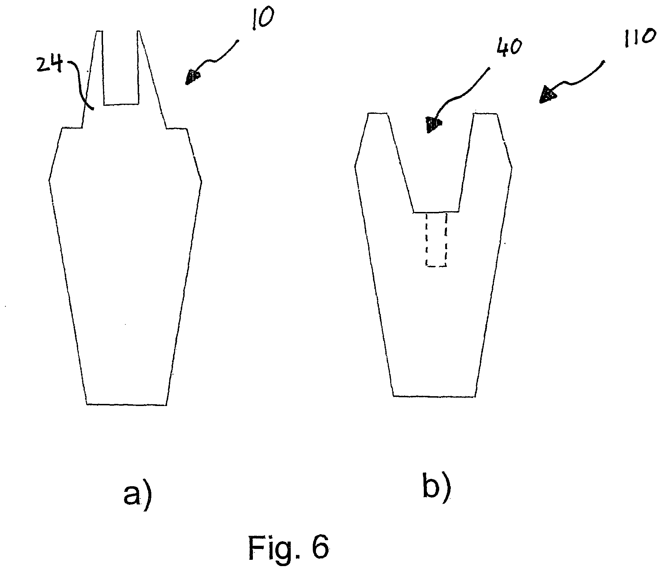

In Figur 6 ist das Implantat 10 der Figuren 1 und 2, das einen externen Konus 24 aufweist, einem Implantat 110 gegenübergestellt, das einen internen Konus 40 für eine interne Konusverbindung aufweist. Gegenüber einer internen Konusverbindung bietet eine externe Konusverbindung mit dem Konus 24 den Vorteil, dass das Implantat 10 massiver und stabiler als das Implantat 110 ausgebildet sein kann. Aufgrund der massiven Ausgestaltung des Implantats 10 können Spannungen bei der Versorgung mit einem Zahnersatz, insbesondere im koronalen Bereich 18 des Insertionsabschnitts 16, vermieden werden, wodurch die Belastung des umliegenden Gewebes reduziert werden kann. Die Gefahr einer Periimplantitis und eines dadurch bedingten Implantatverlustes kann somit durch den externen Konus 24 reduziert werden. Weiterhin ist bei dem massiveren Implantat 10 auch das Risiko einer Implantatfraktur geringer. Zudem steht mehr Material für eine subtraktive Entfernung zur Verfügung, bei der nicht befürchtet werden muss, dass eine kritische Wandstärke des Implantats unterschritten wird.

Auch wenn das Implantat 10 der Figur 6a für die Verwendung innerhalb eines erfindungsgemäßen Systems gegenüber dem Implantat 110 der Figur 6b bevorzugt ist, wird darauf hingewiesen, dass auch das Implantat 110 Bestandteil eines erfindungsgemäßen Systems sein kann.

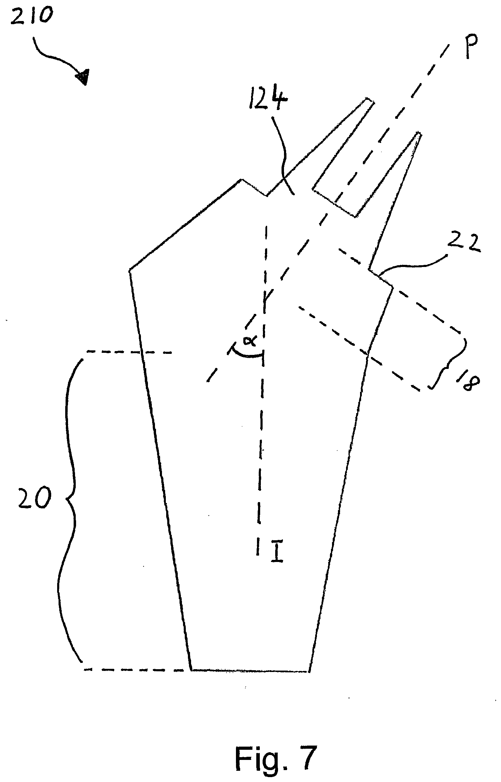

Figur 7 zeigt ein erfindungsgemäßes Zahnimplantat 210, das einen externen Konus 124 aufweist, der sich entlang einer prothetischen Achse P erstreckt, die um einen Winkel α gegenüber der Implantatachse I geneigt ist. Der Winkel α hat einen Wert, der im Bereich 0° < α ≤ 5° liegt. Bei der Versorgung mit Zahnersatz kommt es oft vor, dass die prothetische Achse P, die sich durch das Zentrum des Zahnersatzes erstreckt und entlang der die Verschraubung des Zahnersatzes erfolgt, nicht mit der Implantatachse I zusammenfällt.

Im Stand der Technik werden daher üblicherweise gewinkelte Abutments oder Adapterstücke verwendet, beispielsweise bei der Versorgung mit einem Implantat 110, wie es in Figur 6b gezeigt ist. Dabei wird in einem ersten Schritt das Abutment oder das Adapterstück mit dem inserierten Implantat in Richtung der Implantatachse I verschraubt. In einem zweiten Schritt wird der Zahnersatz entlang der zur Implantatachse I geneigten prothetischen Achse P verschraubt.

Das Implantat 210 der Figur 7 bietet den Vorteil, dass nur eine Verschraubung, nämlich entlang der prothetischen Achse P, erforderlich ist und auf die zweite Verbindung zwischen dem Implantat und dem Abutment oder dem Anschlussteil auch bei einem Auseinanderfallen der prothetischen Achse P und der Implantatachse I verzichtet werden kann. Dadurch ist es möglich, den Zahnersatz direkt auf dem Abutment zu fertigen und bereits im Vorfeld der Behandlungssitzung auf das Abutment zu zementieren. Diese Einheit aus Zahnersatz und Abutment kann dann mit nur einer Verschraubung an dem inserierten Implantat 210 angebracht werden, ohne dass eine Zementierung oder weitere Verbindung im Mundraum des Patienten vorgenommen werden muss, wodurch das Risiko einer Periimplantitis und eines Implantat- und Zahnersatzverlustes reduziert werden kann.

Da das Zahnimplantat 210 der Figur 7 ebenso wie das Zahnimplantat 10 massiv ausgebildet ist, besitzt es dieselben entsprechenden Vorteile, wie sie zuvor in Bezug auf Figur 6a beschrieben wurden, wodurch die Anzahl der Implantatverluste und der Verluste des vom Implantat getragenen Zahnersatzes weiter reduziert werden kann. Das Zahnimplantat 210 kann ebenso wie das Zahnimplantat 10 aus Titan bestehen.

Es wird darauf hingewiesen, dass die zuvor beschriebenen Ausführungsformen rein beispielhaft für die vorliegende Erfindung sind und diese nicht einschränken. Die zuvor beschriebenen Merkmale können in beliebiger Kombination von Bedeutung sein. Der Umfang der vorliegenden Erfindung ergibt sich allein aus den Ansprüchen.

### Bezugszeichenliste

- 10, 110, 210: Zahnimplantat
- 12: Abutment
- 14: Schraube
- 16: Insertionsabschnitt
- 18: Koronaler Bereich
- 20: Apikaler Bereich
- 22: Schulter
- 24, 124: Externer Konus
- 26: Mantelfläche des Implantats
- 28, 328, 428: Ersatzring
- 30: Äußere Mantelfläche des Ersatzrings
- 32: Innere Mantelfläche des Ersatzrings
- 34: Koronale Seite
- 36: Apikale Seite
- 38: Mantelfläche des Implantats nach subtraktiver Bearbeitung
- 40: Interner Konus
- P: Prothetische Achse
- I: Implantatachse
- M: Mittelachse

## Patentansprüche

1. System, umfassend
- ein Zahnimplantat (210) mit einem Insertionsabschnitt (16) zur Verankerung in einem Kieferknochen, und
- einen Ersatzring (28, 328, 428) zum Ersetzen eines subtraktiv entfernbaren ringförmigen Materialbereichs in einem koronalen Bereich (18) des Insertionsabschnitts (16), wobei die Form des Ersatzrings (28, 328, 428) zumindest teilweise derart in die Form des Zahnimplantats (210) im koronalen Bereich (18) einbeschrieben werden kann, dass eine innere Mantelfläche (32) des Ersatzrings (28, 328, 428) innerhalb der Form des Zahnimplantats (210) liegt,
wobei der Insertionsabschnitt (16) entlang einer Implantatachse (I) verläuft, und wobei das Zahnimplantat (210) einen koronalen Vorsprung (124) zur Aufnahme eines Abutments (12) und/oder zur Aufnahme einer Bearbeitungseinheit zur intraoralen subtraktiven Oberflächenbearbeitung des Insertionsabschnitts (16) hat, wobei der koronale Vorsprung (124) einstückig mit dem Insertionsabschnitt (16) verbunden ist, wobei der koronale Vorsprung (124) sich vom Insertionsabschnitt (16) in koronale Richtung erstreckt und entlang einer prothetischen Achse (P) verläuft, und
die prothetische Achse (P) und die Implantatachse (I) zueinander geneigt sind, vorzugsweise mit einem Winkel α im Bereich 0° < α ≤ 45° zueinander geneigt sind.

2. System nach Anspruch 1, bei dem die Beschaffenheit der Außenoberfläche des Ersatzrings (28, 328, 428) der Beschaffenheit der Zahnimplantatoberfläche im koronalen Bereich (18) entspricht.

3. System nach Anspruch 1 oder 2, bei dem die Form des Ersatzrings (28, 328, 428) zumindest teilweise derart in die Form des Zahnimplantats (210) im koronalen Bereich (18) einbeschrieben werden kann, dass die innere Mantelfläche (32) Ersatzrings (28, 328, 428) innerhalb der Form des Zahnimplantats (210) liegt und die äußere Mantelfläche (30) des Ersatzrings (28, 328, 428) auf oder außerhalb der Mantelfläche (26) des Zahnimplantats (210) liegt.

4. System nach einem der vorhergehenden Ansprüche, bei dem die innere Mantelfläche (32) des Ersatzrings (28, 328, 428) abschnittsweise gegenüber einer Mittelachse (M) des Ersatzrings geneigt ist und in Richtung auf eine koronale Seite (34) des Ersatzrings auf die Mittelachse zuläuft, wobei die abschnittsweise Neigung der inneren Mantelfläche (32) des Ersatzrings (28, 328, 428) zur Mittelachse vorzugsweise zwischen 0,5° und 2,5° beträgt, besonders vorzugsweise 1,5° beträgt.

5. System nach einem der vorhergehenden Ansprüche, bei dem die Mantelfläche (26) des Zahnimplantats (210) im koronalen Bereich (18) zumindest abschnittsweise gegenüber der prothetischen Achse (P) geneigt ist und in Richtung auf ein koronales Ende des Insertionsabschnitts (16) auf die prothetische Achse (P) zuläuft, wobei die Neigung der Mantelfläche (26) des Zahnimplantats (10, 110, 210) im koronalen Bereich (18) abschnittsweise vorzugsweise zwischen 35° und 55°, besonders vorzugsweise 45° beträgt, und/oder bei dem die Neigung der Mantelfläche (26) des Zahnimplantats (10, 110, 210) im koronalen Bereich (18) abschnittsweise vorzugsweise zwischen 0° und 5°, besonders vorzugsweise zwischen 0° und 3°, insbesondere 1,5° beträgt.

6. System nach einem der vorhergehenden Ansprüche, bei dem die äußere Mantelfläche (30) des Ersatzrings (28, 328, 428) zumindest abschnittsweise gegenüber einer Mittelachse (M) des Ersatzrings geneigt ist und in Richtung auf eine koronale Seite (34) des Ersatzrings auf die Mittelachse zuläuft, wobei die Neigung der äußeren Mantelfläche (30) des Ersatzrings (28, 328, 428) abschnittsweise vorzugsweise zwischen 35° und 55°, vorzugsweise 45° beträgt.

7. System nach einem der vorhergehenden Ansprüche, bei dem das Zahnimplantat (10, 210) einen koronalen Vorsprung (24, 124) aufweist, der sich vom Insertionsabschnitt (16) in koronale Richtung erstreckt und der zur Aufnahme eines Abutments (12) und/oder zur Aufnahme einer Bearbeitungseinheit zur intraoralen subtraktiven Bearbeitung des Zahnimplantats (10, 210) dient.

8. System, umfassend
- ein Zahnimplantat (10, 210) mit
• einem Insertionsabschnitt (16) zur Verankerung in einem Kieferknochen und
• einem koronalen Vorsprung (24, 124), der sich vom Insertionsabschnitt (16) in koronale Richtung erstreckt und der zur Aufnahme eines Abutments (12) und/oder zur Aufnahme einer Bearbeitungseinheit zur intraoralen subtraktiven Bearbeitung des Zahnimplantats (10, 210) dient, und
- ein Ersatzabutment das formschlüssig auf den koronalen Vorsprung (24, 124) aufsetzbar ist, nachdem dieser durch subtraktives Entfernen von Zahnimplantatmaterial verlängert wurde, das jedoch nicht formschlüssig auf den unverlängerten koronalen Vorsprung (24, 124) aufsetzbar ist.

9. System nach Anspruch 7 oder 8, bei dem der koronale Vorsprung (124) in Richtung einer prothetischen Achse (P) verläuft, die zur Implantatachse des Insertionsabschnitts geneigt ist, vorzugsweise mit einem Winkel α im Bereich 0° < α ≤ 45° geneigt ist.

10. System nach einem der Ansprüche 7 bis 9, bei dem der koronale Vorsprung (24, 124) und der Insertionsabschnitt einstückig verbunden sind.

11. System nach einem der Ansprüche 7 bis 10, bei dem der koronale Vorsprung (24, 124) konusförmig ist und einen Konuswinkel von weniger als 110, vorzugsweise zwischen 6° und 10°, besonders vorzugsweise von 8° hat.

12. System nach einem der Ansprüche 7 bis 11, bei dem der koronale Vorsprung (24, 124) zumindest abschnittsweise einen kreis- oder ellipsenförmigen Querschnitt hat.

13. System nach einem der vorhergehenden Ansprüche, bei dem das Zahnimplantat (10, 110, 210) am koronalen Ende des Insertionsabschnitts (16) eine Schulter (22) aufweist.

14. System nach einem der vorhergehenden Ansprüche, bei dem der Ersatzring oder das Ersatzabutment ein Innengewinde aufweist, so dass der Ersatzring bzw. das Ersatzabutment über ein entsprechendes am Zahnimplantat (10, 110, 210) hergestelltes Außengewinde auf das Zahnimplantat (10, 110, 210) geschraubt werden kann.

15. System nach einem der vorhergehenden Ansprüche, das weiterhin eine Vorrichtung zur intraoralen subtraktiven Bearbeitung des inserierten Zahnimplantats (10, 110, 210) umfasst, wobei die Vorrichtung folgendes umfasst:
- einen Anschluss, mit dem die Vorrichtung innerhalb des Mundraums eines Patienten an das Implantat (10, 110, 210) angeschlossen werden kann, und
- eine subtraktive Bearbeitungseinheit, insbesondere eine Fräse, mit der Zahnimplantatmaterial an der Oberfläche des koronalen Bereichs (18) abgetragen werden kann.

## Claims

1. A system, comprising
- a dental implant (210) having an insertion portion (16) for anchoring in a jaw bone, and
- a replacement ring (28, 328, 428) for replacing a subtractively removable annular material region in a coronal region (18) of the insertion portion (16), the shape of the replacement ring (28, 328, 428) being, at least partially, inscribable into the shape of the dental implant (210) in the coronal region (18), such that an inner peripheral surface (32) of the replacement ring (28) lies within the shape of the dental implant (210),
wherein the insertion portion (16) extends along an implant axis (I), and wherein the dental implant (210) has a coronal projection (124) for receiving an abutment (12) and/or for receiving a machining unit for intra-oral subtractive surface machining of the insertion portion (16), wherein the coronal projection (124) is integrally connected with the insertion portion (16),
wherein the coronal projection (124) extends from the insertion portion (16) in the coronal direction and along a prosthesis axis (P), and
the prosthesis axis (P) and the implant axis (I) are inclined towards each other, preferably inclined towards each other at an angle α in the range 0° < α ≤ 45°.

2. The system according to Claim 1, in which the texture of the external surface of the replacement ring (28, 328, 428) corresponds to the texture of the dental implant surface in the coronal region (18).

3. The system according to Claim 1 or 2, in which the shape of the replacement ring (28, 328, 428), at least partially, can be inscribed into the shape of the dental implant (210) in the coronal region (18), such that the inner peripheral surface (32) of the replacement ring (28, 328, 428) lies within the shape of the dental implant (210) and that the outer peripheral surface (30) of the replacement ring (28, 328, 428) lies on or outside the peripheral surface (26) of the dental implant (210).

4. The system according to any one of the previous claims, in which in some sections, the inner peripheral surface (32) of the replacement ring (28, 328, 428) is inclined towards a central axis (M) of the replacement ring and approaches the central axis in the direction of a coronal side (34) of the replacement ring,
wherein the inclination of some sections of the inner peripheral surface (32) of the replacement ring (28, 328, 428) towards the central axis preferably is between 0.5° and 2.5°, more preferably 1.5°.

5. The system according to any one of the previous claims, in which in at least some sections the peripheral surface (26) of the dental implant (210) in the coronal region (18) is inclined towards a prosthetic axis (P) and approaches the prosthetic axis (P) in the direction of a coronal end of the insertion portion (16), wherein
the inclination of the peripheral surface (26) of the dental implant (10, 110, 210) in the coronal region (18) in some sections preferably is between 35° and 55°, more preferably 45°,
and/or in which the inclination of the peripheral surface (26) of the dental implant (10, 110, 210) in the coronal region (18) in some sections preferably is between 0° and 5°, more preferably between 0° and 3°, in particular 1.5°.

6. The system according to any one of the previous claims, in which in at least some sections, the outer peripheral surface (30) of the replacement ring (28, 328, 428) is inclined towards a central axis (M) of the replacement ring and approaches the central axis in the direction of a coronal side (34) of the replacement ring, wherein
the inclination of some sections of the outer peripheral surface (30) of the replacement ring (28, 328, 428) preferably is between 35° and 55°, preferably 45°.

7. The system according to any one of the previous claims, in which the dental implant (10, 210) comprises a coronal projection (24, 124), which extends from the insertion portion (16) in the coronal direction and which is used for receiving an abutment (12) and/or for receiving a machining unit for the intra-oral subtractive machining of the dental implant (10, 210).

8. A system, comprising
- a dental implant (10, 210) having
• an insertion portion (16) for anchoring in a jaw bone and
• a coronal projection (24, 124), which extends from the insertion portion (16) in the coronal direction and which is used for receiving an abutment (12) and/or for receiving a machining unit for the intra-oral subtractive machining of the dental implant (10, 210), and
- a replacement abutment, which can be mounted in a positive fitting manner onto the coronal projection (24, 124), after the latter has been lengthened by subtractive removal of dental implant material, but which cannot be mounted in a positive fitting manner onto the un-lengthened coronal projection (24,124).

9. The system according to Claim 7 or 8, in which the coronal projection (124) extends in the direction of a prosthesis axis (P), which is inclined with respect to the implant axis of the insertion portion, preferably at an angle α in the range 0° < α ≤ 45°.

10. The system according to any one of Claims 7 to 9, in which the coronal projection (24, 124) and the insertion section are integrally connected.

11. The system according to any one of Claims 7 to 10, in which the coronal projection (24, 124) is conical and has a cone angle of less than 110, preferably between 6° and 10°, particularly preferably of 8°.

12. The system according to any one of Claims 7 to 11, in which in at least some sections the coronal projection (24, 124) has a circular or elliptical cross section.

13. The system according to any one of the previous claims, in which the dental implant (10, 110, 210) has a shoulder (22) at the coronal end of the insertion portion (16).

14. The system according to any of the previous claims, in which the replacement ring or the replacement abutment comprises an internal thread, so that the replacement ring or replacement abutment can be screwed onto the dental implant (10, 110, 210) using a corresponding external thread formed on the dental implant (10, 110, 210).

15. The system according to any one of the previous claims, which also comprises a device for the intra-oral subtractive machining of the inserted dental implant (10, 110, 210), said device comprising the following:
- a connection with which the device can be connected to the implant (10, 110, 210) inside the oral cavity of a patient, and
- a subtractive machining unit, in particular a milling machine, with which dental implant material can be removed from the surface of the coronal region (18).

## Revendications

1. Système comprenant
- un implant dentaire (210) avec une portion d'insertion (16) pour l'ancrage dans un os de la mâchoire et
- une bague de remplacement (28, 328, 428) pour le remplacement d'une zone du matériau annulaire pouvant être retirée de manière soustractive dans une zone coronale (18) de la portion d'insertion (16), dans lequel la forme de la bague de remplacement (28, 328, 428) peut être inscrite au moins partiellement dans la forme de l'implant dentaire (210) dans la zone coronale (18) de façon à ce qu'une surface d'enveloppe interne (32) de la bague de remplacement (28, 328, 428) se trouve à l'intérieur de la forme de l'implant dentaire (210),
dans lequel la portion d'insertion (16) s'étend le long d'un axe d'implant (I) et dans lequel l'implant dentaire (210) comprend une saillie coronale (124) pour le logement d'un pilier (12) et/ou pour le logement d'une unité de traitement pour le traitement superficiel soustractif intraoral de la portion d'insertion (16), dans lequel la saillie coronale (124) est reliée d'une seule pièce avec la portion d'insertion (16), dans lequel la saillie coronale (124) s'étend à partir de la portion d'insertion (16) dans la direction coronale et s'étend le long d'un axe prothétique (P) et
l'axe prothétique (P) et l'axe d'implant (I) sont inclinés l'un par rapport à l'autre de préférence avec un angle α dans la plage 0° < α ≤ 45°.

2. Système selon la revendication 1, dans lequel la nature de la surface externe de la bague de remplacement (28, 328, 428) correspond à la nature de la surface de l'implant dentaire dans la zone coronale (18).

3. Système selon la revendication 1 ou 2, dans lequel la forme de la bague de remplacement (28, 328, 428) peut être inscrite au moins partiellement dans la forme de l'implant dentaire (210) dans la zone coronale (18) de façon à ce que la surface d'enveloppe interne (32) de la bague de remplacement (28, 328, 428) se trouve à l'intérieur de la forme de l'implant dentaire (210) et la surface d'enveloppe externe (30) de la bague de remplacement (28, 328, 428) se trouve sur ou au-dessus de la surface d'enveloppe (26) de l'implant dentaire (210).

4. Système selon l'une des revendications précédentes, dans lequel la surface d'enveloppe interne (32) de la bague de remplacement (28, 328, 428) est inclinée, à certains endroits, par rapport à un axe central (M) de la bague de remplacement et s'étend en direction d'une face coronale (34) de la bague de remplacement vers l'axe central, dans lequel l'inclinaison à certains endroits de la surface d'enveloppe interne (32) de la bague de remplacement (28, 328, 428) par rapport à l'axe central est de préférence entre 0,5° et 2,5°, plus particulièrement de préférence de 1,5°.

5. Système selon l'une des revendications précédentes, dans lequel la surface d'enveloppe (26) de l'implant dentaire (210) dans la zone coronale (18) est inclinée, au moins à certains endroits, par rapport à l'axe prothétique (P) et s'étend en direction d'une extrémité coronale de la portion d'insertion (16) vers l'axe prothétique (P), dans lequel l'inclinaison de la surface d'enveloppe (26) de l'implant dentaire (10, 110, 210) dans la zone coronale (18) est, à certains endroits, de préférence entre 35° et 55°, plus particulièrement de préférence de 45°, et/ou dans lequel l'inclinaison de la surface d'enveloppe (26) de l'implant dentaire (10, 110, 210) dans la zone coronale (18) est, à certains endroits, de préférence entre 0° et 5°, plus particulièrement de préférence entre 0° et 3°, plus particulièrement de 1,5°.

6. Système selon l'une des revendications précédentes, dans lequel la surface d'enveloppe externe (30) de la bague de remplacement (28, 328, 428) est inclinée, au moins à certains endroits, par rapport à un axe central (M) de la bague de remplacement et s'étend en direction d'une face coronale (34) de la bague de remplacement vers l'axe central, dans lequel l'inclinaison de la surface d'enveloppe externe (30) de la bague de remplacement (28, 328, 428) est, à certains endroits, de préférence entre 35° et 55°, de préférence de 45°.

7. Système selon l'une des revendications précédentes, dans lequel l'implant dentaire (10, 210) comprend une saillie coronale (24, 124) qui s'étend de la portion d'insertion (16) dans la direction coronale et qui permet le logement d'un pilier (12) et/ou le logement d'une unité de traitement pour le traitement soustractif intraoral de l'implant dentaire (10, 210).

8. Système comprenant
- un implant dentaire (10, 210) avec
• une portion d'insertion (16) pour l'ancrage dans un os de la mâchoire et
• une saillie coronale (24, 124) qui s'étend à partir de la portion d'insertion (16) dans la direction coronale et qui permet le logement d'un pilier (12) et/ou le logement d'une unité de traitement pour le traitement soustractif intraoral de l'implant dentaire (10, 210) et
- un pilier de remplacement qui peut être posé par complémentarité de forme sur la saillie coronale (24, 124) après que celle-ci ait été prolongée par retrait soustractif du matériau de l'implant dentaire, qui ne peut cependant pas être posé par complémentarité de forme sur la saillie coronale (24, 124) non prolongée.

9. Système selon la revendication 7 ou 8, dans lequel la saillie coronale (124) s'étend en direction d'un axe prothétique (P) qui est incliné par rapport à l'axe d'implant de la portion d'insertion, de préférence avec un angle α dans la plage 0° < α ≤ 45°.

10. Système selon l'une des revendications 7 à 9, dans lequel la saillie coronale (24, 124) et la portion d'insertion sont reliées d'une seule pièce.

11. Système selon l'une des revendications 7 à 10, dans lequel la saillie coronale (24, 124) présente une forme conique et présente un angle de cône inférieur à 110, de préférence entre 6° et 10°, de préférence de 8°.

12. Système selon l'une des revendications 7 à 11, dans lequel la saillie coronale (24, 124) présente, au moins à certains endroits, une section transversale circulaire ou elliptique.

13. Système selon l'une des revendications précédentes, dans lequel l'implant dentaire (10, 110, 210) comprend, au niveau de l'extrémité coronale de la portion d'insertion (16), un épaulement (22).

14. Système selon l'une des revendications précédentes, dans lequel la bague de remplacement ou le pilier de remplacement comprend un filetage interne de façon à ce que la bague de remplacement respectivement le pilier de remplacement puisse être vissé sur l'implant dentaire (10, 110, 210) par l'intermédiaire d'un filetage externe correspondant réalisé sur l'implant dentaire (10, 110, 210).

15. Système selon l'une des revendications précédentes, qui comprend en outre un dispositif pour le traitement soustractif intraoral de l'implant dentaire (10, 110, 210) inséré, dans lequel le dispositif comprend ce qui suit :
- un raccord avec lequel le dispositif peut être raccordé à l'intérieur de la bouche d'un patient à l'implant (10, 110, 210) et
- une unité de traitement soustractif, plus particulièrement une fraise, avec laquelle le matériau de l'implant dentaire de la surface de la zone coronale (18) peut être enlevé.
